# EUROPÄISCHE PATENTSCHRIFT

(11) **EP 3 291 029 B1**
(45) Veröffentlichungstag und Bekanntmachung des Hinweises auf die Patenterteilung: **04.05.2022**
(21) Anmeldenummer: 16186109.1
(22) Anmeldetag: 29.08.2016
(51) Int. Cl.: G05B 13/02, G06N 3/04

(54) **VERFAHREN UND ANORDNUNG ZUM STEUERN EINES TECHNISCHEN SYSTEMS ANHAND EINES STEUERMODELLS**
METHOD AND SYSTEM FOR CONTROLLING A TECHNICAL SYSTEM ON THE BASIS OF A CONTROL MODEL
PROCÉDÉ ET DISPOSITIF DE COMMANDE D'UN SYSTÈME TECHNIQUE À L'AIDE D'UN MODÈLE DE COMMANDE

(43) Veröffentlichungstag der Anmeldung: 07.03.2018
(73) Patentinhaber: Siemens Aktiengesellschaft, 80333 München (DE)
(72) Erfinder: Heesche, Kai, 81539 München (DE); Schneegaß, Daniel, Beijing, 100000 (CN)

(56) Entgegenhaltungen:
- WO-A2-2016/118206
- ZHANG QINGCHEN ET AL: "Privacy Preserving Deep Computation Model on Cloud for Big Data Feature Learning", IEEE TRANSACTIONS ON COMPUTERS, IEEE SERVICE CENTER, LOS ALAMITOS, CA, US, Bd. 65, Nr. 5, 1. Mai 2016 (2016-05-01), Seiten 1351-1362, XP011605168, ISSN: 0018-9340, DOI: 10.1109/TC.2015.2470255 [gefunden am 2016-04-05]

## Beschreibung

Bei der Steuerung komplexer technischer Systeme, wie z.B. Gasturbinen, Windturbinen, Fertigungsanlagen, Kraftfahrzeugen oder medizinischen oder technischen Bildgebungs- oder Analysesystemen, ist es in der Regel wünschenswert, insbesondere ein Verhalten, eine Wirkung und/oder eine Ausbeute des technischen Systems hinsichtlich vorgegebener Kriterien zu optimieren. Hierfür verwenden zeitgemäße Steuerungen häufig komplexe Steuermodelle, die aus Betriebsdaten des technischen Systems spezifische Steuerdaten zur Steuerung des technischen Systems ableiten. Derartige Steuermodelle können insbesondere zur Simulation, Prognose, Analyse und/oder Klassifikation von Betriebsdaten des technischen Systems genutzt werden. Zeitgemäße Steuermodelle basieren häufig auf Simulationstechniken oder Techniken des maschinellen Lernens, z.B. mittels neuronaler Netze und können anhand von Trainingsdaten oder anderen Daten des technischen Systems spezifisch darauf trainiert oder ausgelegt werden, die Steuerung hinsichtlich vorgegebener Kriterien zu optimieren.

Eine Erstellung und Implementierung eines für ein technisches System optimierten Steuermodells erfordert in der Regel spezifische Kenntnisse und einen erheblichen Entwicklungsaufwand. Deshalb werden derartige Steuermodelle häufig von entsprechend spezialisierten Anbietern entworfen. Zum Entwerfen oder Trainieren eines solchen Steuermodells benötigt der Anbieter jedoch in der Regel Daten des technischen Systems. Wird das entworfene Steuermodell dann zum Steuern des technischen Systems eingesetzt, sind dem Steuermodell ebenfalls Daten des technischen Systems zuzuführen. In vielen Fällen hat jedoch ein Nutzer oder Betreiber des technischen Systems ein Interesse daran, dass kritische Daten des technischen Systems nicht an Außenstehende gelangen. Auf der anderen Seite hat der Anbieter des Steuermodells ein entsprechendes Interesse daran, dass Implementierungsdetails seines Steuermodells nicht an Außenstehende gelangen.

In der Regel müssen indessen das Steuermodell und Daten des technischen Systems gewissermaßen an einer Stelle zusammenkommen, um das Steuermodell zu entwerfen bzw. auszuführen. Somit stellt sich das Problem, wie eine Vertraulichkeit von Interna des Steuermodells einerseits und von kritischen Daten des technischen Systems andererseits gegenüber der jeweils anderen Partei gewahrt werden kann.

Eine Möglichkeit, eine gewisse Vertraulichkeit zu wahren, besteht darin, dass der Modellanbieter sein Steuermodell dem Nutzer des technischen Systems nur in verschlüsselter Form zur Verfügung stellt. Zum Ausführen des verschlüsselten Steuermodells beim Nutzer wird diesem darüber hinaus ein Interpreter zur Verfügung gestellt, der das Steuermodell zumindest zur Laufzeit temporär entschlüsseln kann. Insofern einerseits das Steuermodell beim Nutzer ausgeführt wird, bleiben dessen Daten in der Regel vertraulich. Insofern andererseits das Steuermodell verschlüsselt ist, kann der Nutzer zwar nicht direkt auf die Modellinterna zugreifen, doch könnte der Nutzer den Interpreter dekompilieren und so die Verschlüsselung des Steuermodells kompromittieren. Eine solche Dekompilation ist zwar in der Regel mit erheblichem Aufwand verbunden, doch fällt die Vertraulichkeit der Modellinterna mit der Bereitschaft des Nutzers diesen Aufwand zu investieren.

Aus den Publikationen WO 2016/118206 A2 sowie "Privacy Preserving Deep Computation Model on Cloud for Big Data Feature Learning" von Qingchen Zhang et al. in IEEE TRANSACTIONS ON COMPUTERS, Bd. 65, Nr. 5, Seiten 1351-1362 ist bekannt, neuronale Netze anhand von homomorph verschlüsselten Daten zu trainieren. Dies erfordert jedoch in der Regel einen geheimen Schlüssel oder eine entsprechende Vertrauensbeziehung. Zudem sind die möglichen Rechenoperationen bei homomorpher Verschlüsselung häufig stark eingeschränkt.

Es ist Aufgabe der Erfindung, ein Verfahren und eine Anordnung zum Steuern eines technischen Systems anhand eines Steuermodells anzugeben, bei denen eine Vertraulichkeit des Steuermodells sowie von Daten des technischen Systems besser gewahrt wird.

Gelöst wird diese Aufgabe durch ein Verfahren mit den Merkmalen des Patentanspruchs 1, durch eine Anordnung mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Zum Steuern eines technischen Systems anhand eines Steuermodells wird eine Transformationsfunktion zum Reduzieren und/oder Obfuskieren von Betriebsdaten des technischen Systems zu transformierten Betriebsdaten bereitgestellt. Unter Obfuskieren ist hierbei insbesondere ein Verschleiern, z.B. durch Kodieren, Verwürfeln, Verstecken und/oder Umordnen von Daten zu verstehen, so dass eine Rekonstruktion der ursprünglichen Betriebsdaten ohne Vorwissen zumindest wesentlich erschwert wird. Das Steuermodell wird durch einen Modellgenerator abhängig von ersten Betriebsdaten des technischen Systems generiert. Erfindungsgemäß werden in einer vom Steuermodell separierten Zugriffsdomäne zweite Betriebsdaten des technischen Systems erfasst und durch die Transformationsfunktion zu transformierten zweiten Betriebsdaten transformiert, die von einem in einer separierten Zugriffsdomäne außerhalb der ersten Zugriffsdomäne befindlichen Modellausführungssystem empfangen werden. Durch das Modellausführungssystem wird das Steuermodell unter Zuführung der transformierten zweiten Betriebsdaten in einer von den zweiten Betriebsdaten separierten Zugriffsdomäne ausgeführt, wobei aus den transformierten zweiten Betriebsdaten Steuerdaten abgeleitet werden. Die Steuerdaten werden zur Steuerung des technischen Systems übermittelt.

Unter einer Zugriffsdomäne ist hierbei insbesondere eine Domäne in einem Datennetzwerk zu verstehen, auf deren Datenobjekte innerhalb der Domäne zugegriffen werden kann. Dementsprechend ist auf ein von einer Zugriffsdomäne separiertes Datenobjekt von dieser Zugriffsdomäne aus kein Datenzugriff möglich, oder ein Datenzugriff ist zumindest wesentlich erschwert.

Zur Ausführung des erfindungsgemäßen Verfahrens sind eine Anordnung, ein Computerprogrammprodukt sowie ein computerlesbares Speichermedium vorgesehen. Die Anordnung zur Ausführung des erfindungsgemäßen Verfahrens kann insbesondere mittels Datenprozessoren implementiert werden, wie z.B. mittels ASICs (Application Specific Integrated Circuits), DSPs (Digital Signal Processors) und/oder FPGAs (Field-programmable Gate Arrays).

Ein Vorteil der Erfindung ist darin zu sehen, dass auf einfache Weise einerseits ein Zugriff eines Betreibers des technischen Systems auf das Steuermodell und andererseits ein Zugriff eines Modellanbieters auf Betriebsdaten des technischen Systems zumindest wesentlich erschwert werden kann. Eine Verschlüsselung des Steuermodells ist dabei nicht erforderlich.

Vorteilhafte Ausführungsformen und Weiterbildungen der Erfindung sind in den abhängigen Ansprüchen angegeben.

Gemäß einer vorteilhaften Ausführungsform der Erfindung können die Generierung und insbesondere ein Training des Steuermodells anhand von durch die Transformationsfunktion transformierten ersten Betriebsdaten erfolgen. Auf diese Weise kann vermieden werden, einem Modellanbieter originale Betriebsdaten des technischen Systems z.B. zu Trainingszwecken zur Verfügung zu stellen. Da ein Trainingserfolg in vielen Fällen nicht wesentlich von einer vorherigen Transformation von Trainingsdaten beeinträchtigt wird, kann das Steuermodell in der Regel auch anhand transformierter Betriebsdaten effektiv trainiert werden.

Vorteilhafterweise kann das Steuermodell ein neuronales Netz, einen datengetriebenen Regressor, eine Support-Vector-Machine und/oder einen Entscheidungsbaum umfassen. Für die vorstehenden Implementierungsvarianten des Steuermodells sind eine Vielzahl von effizienten Trainings- und Lernverfahren verfügbar.

Vorteilhafterweise können der Modellgenerator und/oder das Modellausführungssystem durch einen Modellanbieter separiert vom technischen System und insbesondere in einer vom technischen System separierten Zugriffsdomäne betrieben werden. Nach einer vorteilhaften Ausführungsform der Erfindung kann die Transformationsfunktion durch den Modellanbieter bereitgestellt werden und eine Informationsreduktion ausführen. Dies ist insofern vorteilhaft, als die Transformationsfunktion und das Steuermodell durch den Modellanbieter besonders gut aufeinander abgestimmt werden können. Durch die Informationsreduktion kann es dabei dem Modellanbieter erheblich erschwert werden, auf die originalen Betriebsdaten des technischen Systems rückzuschließen.

Nach einer weiteren vorteilhaften Ausführungsform der Erfindung kann die Transformationsfunktion durch einen Betreiber des technischen Systems bereitgestellt werden und eine Informationsobfuskation und/oder eine Informationsreduktion ausführen. Dies ist insofern vorteilhaft, als die Implementierung der Transformationsfunktion einem Modellanbieter entzogen werden kann. Auf diese Weise kann die Vertraulichkeit der Betriebsdaten gegenüber dem Modellanbieter besser gewahrt werden.

Gemäß einer weiteren vorteilhaften Ausführungsform der Erfindung kann ein Initialmodell anhand der ersten Betriebsdaten trainiert und in eine erste Teilfunktion und eine zweite Teilfunktion aufgespalten werden. Die erste Teilfunktion kann dann als Transformationsfunktion und die zweite Teilfunktion als Steuermodell bereitgestellt werden. Auf diese Weise können eine trainierte Transformationsfunktion und ein trainiertes Steuermodell besonders einfach bereitgestellt werden. Die gewissermaßen gemeinsam trainierten Teilfunktionen können dabei besonders gut aufeinander abgestimmt werden. Bei einer Implementierung des Initialmodells als neuronales Netz mit mindestens einer verdeckten Schicht kann dieses neuronale Netz vorzugsweise an einer verdeckten Schicht in zwei neuronale Teilnetze aufgespalten werden, die dann jeweils die erste bzw. zweite Teilfunktion implementieren. Die erste Teilfunktion kann eine ursprüngliche Eingabeschicht als Eingabeschicht und die verdeckte Schicht als Ausgabeschicht umfassen. Die zweite Teilfunktion kann die verdeckte Schicht als Eingabeschicht und die ursprüngliche Ausgabeschicht als Ausgabeschicht umfassen.

Nach einer besonders vorteilhaften Ausführungsform der Erfindung kann die Transformationsfunktion einen neuronalen Autoencoder umfassen. Ein neuronaler Autoencoder erlaubt eine effiziente und in der Regel nicht benutzerinterpretierbare Kodierung und/oder Reduktion der Betriebsdaten unter weitgehender Beibehaltung eines wesentlichen Dateninhalts.

Darüber hinaus kann die Transformationsfunktion eine Multiplikation mit einer Zufallsmatrix umfassen. Die Zufallsmatrix kann hierbei mit Zufallswerten besetzt sein. Zur Obfuskation der Betriebsdaten kann eine invertierbare Zufallsmatrix vorgesehen sein. Zur Reduktion der Betriebsdaten kann eine nicht invertierbare, insbesondere nichtquadratische Zufallsmatrix vorgesehen sein.

Weiterhin kann das Steuermodell anhand von vom technischen System unabhängigen Daten, z.B. anhand von Zeitdaten, Datumsangaben, Wetterdaten und/oder anderen Umgebungsdaten trainiert werden. Auf diese Weise können auch externe Einflussdaten, die ein Verhalten des technischen Systems beeinflussen, bei der Optimierung der Steuerung berücksichtigt werden.

Ausführungsbeispiele der Erfindung werden nachfolgend anhand der Zeichnung näher erläutert. Dabei veranschaulichen jeweils in schematischer Darstellung:
- Figur 1A: ein Training eines Steuermodells gemäß einem ersten Ausführungsbeispiel der Erfindung,
- Figur 1B: ein Training eines Steuermodells gemäß einem zweiten Ausführungsbeispiel der Erfindung,
- Figur 2: einen neuronalen Autoencoder als erfindungsgemäße Transformationsfunktion,
- Figur 3: ein Ausführen eines trainierten Steuermodells zum Steuern eines technischen Systems und
- Figur 4: ein Training eines Initialmodells und dessen Aufspaltung in eine Transformationsfunktion und ein Steuermodell.

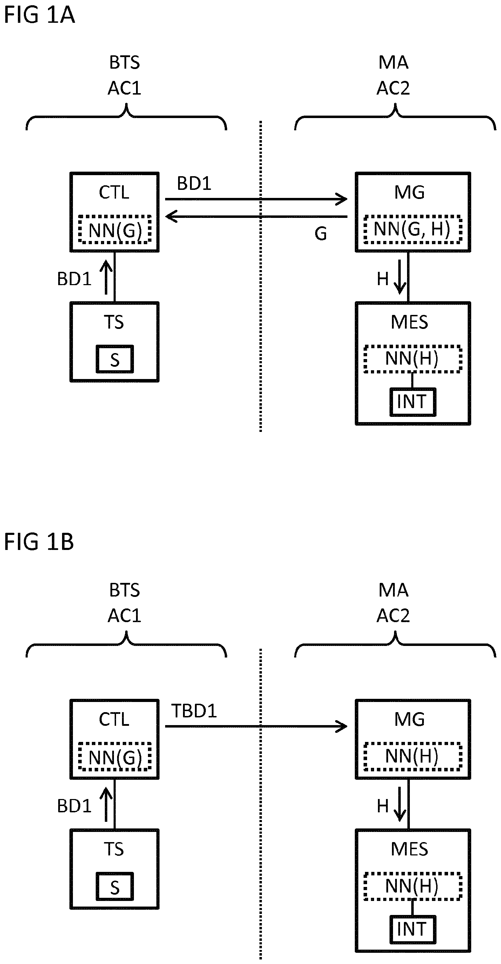

Die Figuren 1A und 1B veranschaulichen eine Generierung bzw. ein Training eines Steuermodells gemäß verschiedener Ausführungsbeispiele. Gleiche Entitäten sind in den Figuren 1A und 1B durch gleiche Bezugszeichen bezeichnet.

Die Figuren 1A und 1B zeigen jeweils ein technisches System TS, z.B. ein Kraftwerk, eine Turbine, eine Produktionsanlage, ein Kraftfahrzeug oder ein medizinisches oder technisches Bildgebungs- oder Analysesystem in schematischer Darstellung. Zum Steuern des technischen Systems TS ist eine Steuerung CTL an das technische System TS gekoppelt. Die Steuerung CTL kann als Teil des technischen Systems TS oder ganz oder teilweise extern zum technischen System TS implementiert sein. Weiterhin zeigen die Figuren 1A und 1B einen Modellgenerator MG zum Generieren und Trainieren eines Steuermodells sowie ein mit dem Modellgenerator MG gekoppeltes Modellausführungssystem MES mit einem Interpreter INT zum Ausführen des Steuermodells.

Das technische System TS verfügt über Sensoren S zum Erfassen von Betriebsdaten des technischen Systems TS. Derartige Betriebsdaten können z.B. physikalische, regelungstechnische und/oder bauartbedingte Betriebsgrößen, Eigenschaften, Vorgabewerte, Zustandsdaten, Systemdaten, Steuerdaten, Sensordaten, Bilddaten, wie z.B. Röntgenbilder, Messwerte, Umgebungsdaten oder andere im Betrieb des technischen Systems TS anfallende Daten sein. Die Betriebsdaten des technischen Systems TS werden durch geeignete Datenstrukturen, insbesondere durch hochdimensionale Vektoren dargestellt.

Ein Betreiber BTS des technischen Systems TS betreibt, nutzt und/oder steuert das technische System TS sowie die Steuerung CTL. Demgegenüber werden der Modellgenerator MG sowie das Modellausführungssystem MES durch einen Modellanbieter MA betrieben, der ein Steuermodell zum Steuern eines technischen Systems TS erzeugt.

Der Betreiber BTS des technischen Systems TS hat Datenzugriff auf eine erste Zugriffsdomäne AC1, die von einer zweiten Zugriffsdomäne AC2 des Modellanbieters MA separiert ist. Dies bedeutet, dass der Betreiber BTS keinen Datenzugriff auf die zweite Zugriffsdomäne AC2 hat. Entsprechend hat der Modellanbieter MA Datenzugriff auf die zweite Zugriffsdomäne AC2, aber keinen Datenzugriff auf die erste Zugriffsdomäne AC1. In den Figuren 1A und 1B sind die erste Zugriffsdomäne AC1 und die zweite Zugriffsdomäne AC2 durch eine punktierte Linie separiert.

In der ersten Zugriffsdomäne AC1 befinden sich das technische System TS und die Steuerung CTL, die dementsprechend keinen Datenzugriff auf die zweite Zugriffsdomäne AC2 haben. In der zweiten Zugriffsdomäne AC2 befinden sich der Modellgenerator MG sowie das Modellausführungssystem MES, die dementsprechend keinen Datenzugriff auf die erste Zugriffsdomäne AC1 haben.

Der Modellgenerator MG dient insbesondere zum Trainieren eines Steuermodells für das technische System TS. Unter einem Training sei hierbei allgemein eine Abbildung von Eingangsparametern eines Modells, z.B. eines neuronalen Netzes, auf eine oder mehrere Zielgrößen verstanden. Diese Abbildung wird nach vorgebbaren, gelernten oder zu lernenden Kriterien während einer Trainingsphase des Modells optimiert. Als Kriterien können insbesondere eine Performanz, ein Ressourcenverbrauch, eine Ausbeute und/oder ein Verschleiß des technischen Systems und/oder eine Produktionsgüte, eine Prognosegüte, eine Klassifikationsgüte, eine Analysegüte und/oder eine Simulationsgüte herangezogen werden. Unter einem solchen Training sei insbesondere ein Training eines neuronalen Netzes, eine datengetriebene Regression, ein Parameterfitting eines analytischen Modells oder ein anderes Modell-Optimierungsverfahren verstanden. Bei einem neuronalen Netz werden durch ein Training z.B. eine Vernetzungsstruktur von Neuronen, Schwellenwerte von Neuronen und/oder Gewichte von Verbindungen zwischen Neuronen hinsichtlich eines Optimierungskriteriums optimiert. Beim Training eines Regressors können Koeffizienten eines verwendeten Regressormodells optimiert werden.

Der Modellgenerator MG und/oder das Modellausführungssystem MES können alternativ oder zusätzlich zumindest teilweise außerhalb der zweiten Zugriffsdomäne AC2, z.B. in einer Cloud implementiert werden, sofern kein Datenzugriff auf die erste Zugriffsdomäne AC1 besteht.

Die Steuerung CTL, der Modellgenerator MG sowie das Modellausführungssystem MES verfügen jeweils über einen oder mehrere Prozessoren zum Ausführen aller Verfahrensschritte der Steuerung CTL, des Modellgenerators MG bzw. des Modellausführungssystems MES und über einen oder mehrere Speicher zum Speichern aller von der Steuerung CTL, dem Modellgenerator MG bzw. dem Modellausführungssystem MES zu verarbeitenden Daten.

In den durch die Figuren 1A und 1B veranschaulichten Ausführungsbeispielen werden erste Betriebsdaten BD1 des technischen Systems TS erfasst, z.B. mittels der Sensoren S, und vom technischen System TS zur Steuerung CTL übermittelt. Die ersten Betriebsdaten BD1 werden als Trainingsdaten zum Generieren und insbesondere Trainieren des Steuermodells verwendet.

Figur 1A veranschaulicht spezifisch eine Generierung bzw. ein Training eines Steuermodells H für den Fall, dass der Betreiber BTS bereit ist, dem Modellanbieter MA Betriebsdaten des technischen Systems TS, hier die Trainingsdaten BD1, für ein Training des Steuermodells H zur Verfügung zu stellen. In diesem Fall werden die ersten Betriebsdaten BD1 von der Steuerung CTL zum Modellgenerator MG, d.h. von der ersten Zugriffsdomäne AC1 in die zweite Zugriffsdomäne AC2 übermittelt. Anhand der übermittelten ersten Betriebsdaten BD1 generiert und trainiert der Modellgenerator MG in der zweiten Zugriffsdomäne AC2, d.h. außerhalb der ersten Zugriffsdomäne AC1, eine Transformationsfunktion G sowie das Steuermodell H.

Die Transformationsfunktion G dient zum Obfuskieren und/oder Reduzieren von Betriebsdaten des technischen Systems TS zu transformierten Betriebsdaten. Die Betriebsdaten sollen durch die Transformationsfunktion G derart transformiert werden, dass ein Zugriff bzw. eine Rekonstruktion der ursprünglichen Betriebsdaten wesentlich erschwert wird. Insbesondere sollen die transformierten Betriebsdaten nicht benutzerinterpretierbar sein. Durch die Obfuskation, d.h. Verschleierung werden Eingabedaten, d.h. hier die ersten Betriebsdaten BD1, so umgesetzt, insbesondere kodiert, versteckt, verwürfelt und/oder umgeordnet, dass eine Rekonstruktion der Eingabedaten ohne Vorwissen wesentlich erschwert wird. Ein Informationsinhalt der Eingabedaten kann hierbei zwar erhalten bleiben, aber nur in nicht ohne weiteres interpretierbarer oder rekonstruierbarer Form. Alternativ oder zusätzlich soll durch die Reduktion der Betriebsdaten BD1 für die Steuerung des technischen Systems TS weniger relevante Information aus den ersten Betriebsdaten BD1 entfernt und möglichst nur steuerungsrelevante Information behalten werden. Durch eine solche Informationsreduktion kann ein Informationsinhalt der ersten Betriebsdaten BD1 und damit insbesondere eine Dimension der darstellenden Betriebsdatenvektoren reduziert werden, ohne wesentlichen Verlust von steuerungsrelevantem Informationsinhalt.

Insofern die Transformationsfunktion G in dem durch Figur 1A veranschaulichten Ausführungsbeispiel in der zweiten Zugriffsdomäne AC2 generiert wird, ist die Transformationsfunktion G dem Modellanbieter bekannt und sollte zur Wahrung der Vertraulichkeit der zu transformierenden ersten Betriebsdaten BD1 gegenüber dem Modellanbieter MA insbesondere eine Informationsreduktion durchführen, so dass der Modellanbieter MA die ursprünglichen ersten Betriebsdaten BD1 nicht ohne Weiteres rekonstruieren kann.

Die trainierte Transformationsfunktion G wird vom Modellgenerator MG zur Steuerung CTL, d.h. von der zweiten Zugriffsdomäne AC2 in die erste Zugriffsdomäne AC1 übermittelt. In der Steuerung CTL wird die Transformationsfunktion G durch ein trainiertes neuronales Netz NN(G) implementiert.

Das trainierbare bzw. trainierte Steuermodell H dient zum Simulieren oder Analysieren eines physikalischen, regelungstechnischen, stochastischen und/oder anderen Wirkungszusammenhangs des technischen Systems TS oder eines Teils davon, zur Prognose, Klassifikation von Betriebsdaten und/oder zum Steuern des technischen Systems TS. Das Steuermodell H kann damit z.B. zur Turbinensteuerung, als Softsensor, zur Tumorklassifikation anhand von Röntgenbildern oder zur Wetterprognose eingesetzt werden. Das Steuermodell H modelliert vorzugsweise das technische System TS oder einen Teil davon und/oder eine technische oder biologische Struktur, abhängig von der das technische System TS gesteuert oder beeinflusst wird. Das Steuermodell H kann als Funktion oder Routine aufgefasst werden, der durch die Transformationsfunktion G transformierte Betriebsdaten des technischen Systems TS als Eingabedaten zugeführt werden, und die Steuerdaten als Ausgabedaten ausgibt. Die Steuerdaten können hierbei insbesondere ein Ergebnis einer Simulation, Prognose, Analyse und/oder Klassifikation sein. Das Steuermodell H ist so zu trainieren, dass aus den Eingabedaten hinsichtlich vorgegebener Kriterien optimierte Steuerdaten durch das Steuermodell H abgeleitet werden können. Zum Training steht eine Vielzahl von Standardtrainingsverfahren zur Verfügung. Die vorgegebenen Kriterien können hierbei z.B. durch eine geeignete Kostenfunktion repräsentiert werden, zu deren Minimierung ein bekanntes Lernverfahren, wie z.B. überwachtes, unüberwachtes und/oder bestärkendes Lernen ausgeführt wird. Das Steuermodell H wird vorzugsweise durch eine Datenstruktur kodiert, die vom Interpreter INT dekodierbar und vorzugsweise anwendungsspezifisch ausführbar ist. Insbesondere kann das Steuermodell H ein neuronales Netz, einen datengetriebenen Regressor, eine Support-Vector-Machine, einen Entscheidungsbaum und/oder ein anderes analytisches Modell oder eine Kombination hiervon umfassen.

Da ein Trainingserfolg, insbesondere eines neuronalen Netzes, in vielen Fällen nicht wesentlich von einer vorherigen Transformation der Eingabedaten, hier der ersten Betriebsdaten BD1, zu einer nicht benutzerinterpretierbaren Form beeinträchtigt wird, kann das Steuermodell H in der Regel auch anhand transformierter Betriebsdaten zur Ableitung gut optimierter Steuerdaten trainiert werden.

Im Modellgenerator MG werden die Transformationsfunktion G und das Steuermodell H vorzugsweise durch ein künstliches neuronales Netz NN(G, H) implementiert. Das trainierte Steuermodell H wird vom Modellgenerator MG zum Modellausführungssystem MES übermittelt. Dort wird das Steuermodell H vorzugsweise durch ein neuronales Netz NN(H) implementiert. Das Steuermodell H bleibt dabei außerhalb der ersten Zugriffsdomäne AC1, d.h. der Betreiber BTS des technischen Systems TS erlangt keinen Zugriff auf das Steuermodell H.

Figur 1B veranschaulicht spezifisch eine Generierung bzw. ein Training eines Steuermodells H für den Fall, dass der Betreiber BTS des technischen System TS nicht bereit ist, dem Modellanbieter MA Betriebsdaten des technischen Systems TS zur Verfügung zu stellen.

In diesem Fall wird die Transformationsfunktion G durch die Steuerung CTL anhand der ersten Betriebsdaten BD1 in der ersten Zugriffsdomäne AC1 generiert und trainiert. Die Transformationsfunktion G wird in der Steuerung CTL vorzugsweise durch ein neuronales Netz NN(G) implementiert. Durch das trainierte neuronale Netz NN(G) werden die ersten Betriebsdaten BD1 innerhalb der ersten Zugriffsdomäne AC1, d.h. außerhalb der zweiten Zugriffsdomäne AC2 zu transformierten ersten Betriebsdaten TBD1 transformiert.

Insofern die Transformationsfunktion G in dem durch die Figur 1B beschriebenen Ausführungsbeispiel in der ersten Zugriffsdomäne AC1 generiert wird, ist die Transformationsfunktion G dem Modellanbieter MA im Allgemeinen nicht bekannt. Damit die Transformation durch die Transformationsfunktion G möglichst wenige für die optimierte Steuerung relevanten Daten aus den ersten Betriebsdaten BD1 entfernt, wird vorzugsweise eine im wesentlichen informationserhaltende und/oder invertierbare Transformationsfunktion G generiert, die eine effiziente Obfuskation und gegebenenfalls Dimensionsreduktion der ersten Betriebsdaten BD1 durchführt. Alternativ oder zusätzlich kann die Transformationsfunktion G eine anwendungsspezifische Vorverarbeitung der ersten Betriebsdaten BD1 und/oder einen neuronalen Autoencoder umfassen, der gegebenenfalls eine Dimensionsreduktion der ersten Betriebsdaten BD1 ausführt. Darüber hinaus können verschiedene Basisfunktionen berechnet und für das Training der Transformationsfunktion G oder des Steuermodells H verwendet werden. Weiterhin können Zusatzdaten zu den ersten Betriebsdaten BD1 hinzugefügt werden, um einen Trainingserfolg für die Transformationsfunktion G und/oder für das Steuermodell H zu gewährleisten bzw. zu verbessern.

Die transformierten ersten Betriebsdaten TBD1 werden von der Steuerung CTL zum Modellgenerator MG übermittelt. Der Modellgenerator MG generiert und trainiert daraufhin das Steuermodell H anhand der transformierten ersten Betriebsdaten TBD1. Das Steuermodell H wird hierbei vorzugsweise durch ein neuronales Netz NN(H) implementiert. Ansonsten können die Transformationsfunktion G und das Steuermodell H, wie in Zusammenhang mit Figur 1A beschrieben, verwendet werden.

Das trainierte Steuermodell H wird vom Modellgenerator MG zum Modellausführungssystem MES übermittelt. Im Modellausführungssystem MES wird das Steuermodell H vorzugsweise durch ein neuronales Netz NN(H) implementiert. Das Steuermodell H bleibt hierbei außerhalb der ersten Zugriffsdomäne AC1, so dass der Betreiber BTS des technischen Systems TS keinen Zugriff auf das Steuermodell H erlangt.

In beiden durch die Figuren 1A und 1B beschriebenen Ausführungsbeispielen kann das neuronale Netz NN(G) vorzugsweise mittels eines neuronalen Autoencoders implementiert werden. Ein Autoencoder umfasst ein künstliches neuronales Netz zum Lernen von effizienten Datenkodierungen, insbesondere zur effizienten Datenkomprimierung und/oder zum Extrahieren wesentlicher oder charakteristischer Merkmale von Eingabedaten.

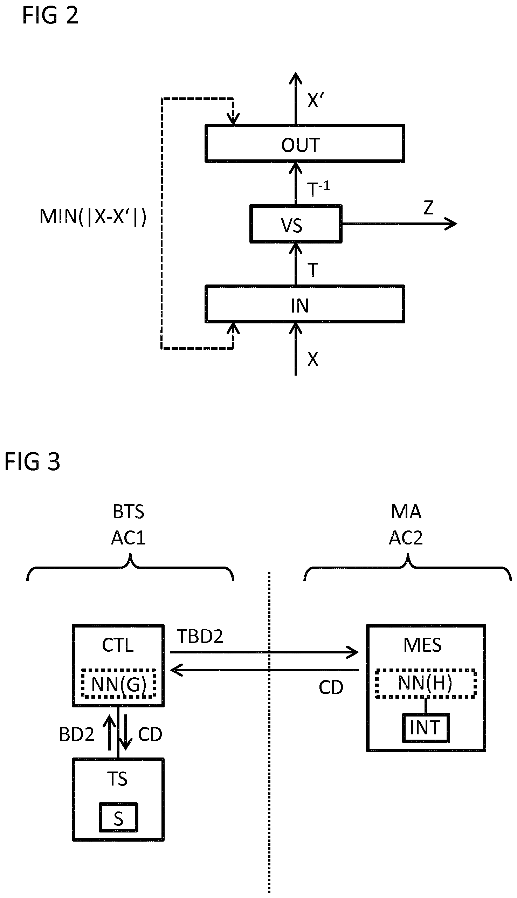

Ein solcher Autoencoder ist in Figur 2 schematisch dargestellt. In den vorliegenden Ausführungsbeispielen umfasst der neuronale Autoencoder eine neuronale Eingabeschicht IN, mindestens eine versteckte Schicht VS, die signifikant weniger Neuronen aufweist als die Eingabeschicht IN, sowie eine Ausgabeschicht OUT, deren Neuronen zu den Neuronen der Eingabeschicht IN korrespondieren. In die Eingabeschicht IN werden Eingabedaten X eingespeist, die über die versteckte Schicht VS zur Ausgabeschicht OUT propagiert werden. Letztere gibt die propagierten Daten als Ausgabedaten X` aus. Der Autoencoder wird darauf trainiert, dass die Ausgabedaten X` möglichst wenig von den Eingabedaten X abweichen, indem z.B. ein Betrag einer Differenz X-X` minimiert wird.

Bei der Propagation von der Eingabeschicht IN zur versteckten Schicht VS werden die Eingabedaten X einer Transformation T unterworfen. Wenn sich durch das Training eine geringe Abweichung |X-X'| erreichen lässt, bedeutet dies, dass die Transformation T bei der Propagation der Daten von der versteckten Schicht VS zur Ausgabeschicht OUT zumindest näherungsweise rückgängig gemacht wird, d.h. dass die Daten bei diesem Übergang näherungsweise der Transformation T⁻¹ unterworfen werden. Weiterhin bedeutet eine geringe Abweichung |X-X'|, dass die Eingabedaten bereits gut durch die geringere Anzahl von Neuronen der versteckten Schicht VS repräsentiert bzw. daraus mittels der trainierten Schichten VS und OUT rekonstruiert werden können.

Die von der versteckten Schicht VS propagierten Daten stellen also eine effiziente Kodierung der Eingabedaten X dar und können als transformierte Eingabedaten Z ausgegeben werden. Auf der anderen Seite ist eine Rekonstruktion der ursprünglichen Eingabedaten X aus den transformierten Ausgabedaten Z ohne Kenntnis der trainierten versteckten Schicht VS und der trainierten Ausgabeschicht OUT nur schwer möglich. Ein Autoencoder ist deshalb eine besonders vorteilhafte Implementierung der Transformationsfunktion G im Sinne der Erfindung.

In den vorliegenden Ausführungsbeispielen wird ein neuronaler Autoencoder als Transformationsfunktion G mit den ersten Betriebsdaten BD1 als Eingabedaten X trainiert. Der trainierte Autoencoder, d.h. die trainierte Transformationsfunktion G gibt die transformierten ersten Betriebsdaten TBD1 als transformatierte Daten Z aus.

Alternativ oder zusätzlich kann die Transformationsfunktion G eine Multiplikation mit einer invertierbaren oder nicht invertierbaren Zufallsmatrix umfassen.

Figur 3 veranschaulicht ein Ausführen eines trainierten Steuermodells, hier des trainierten Steuermodells H, zum Steuern des technischen Modells TS. Das Steuermodell H kann hierbei gemäß einem der obigen Ausführungsbeispiele generiert und trainiert sein. Ansonsten sind in den Figuren 1A, 1B und 3 gleiche Entitäten durch gleiche Bezugszeichen bezeichnet.

Zum Steuern des technischen Systems TS werden durch die Steuerung CTL zweite Betriebsdaten BD2 des technischen Systems TS innerhalb der ersten Zugriffsdomäne AC1 erfasst und durch das trainierte neuronale Netz NN(G) zu transformierten zweiten Betriebsdaten TBD2 transformiert. Dies erfolgt insbesondere außerhalb der zweiten Zugriffsdomäne AC2, so dass der Modellanbieter MA keinen Zugriff auf die zweiten Betriebsdaten BD2 oder auf die Transformationsfunktion G erlangt.

Die transformierten zweiten Betriebsdaten TBD2 werden von der Steuerung CTL zum Modellausführungssystem MES übermittelt. Durch das Modellausführungssystem MES wird das trainierte neuronale Netz NN(H) mittels des Interpreters INT in der zweiten Zugriffsdomäne AC2 ausgeführt. Dabei werden dem trainierten Steuermodell H die transformierten zweiten Betriebsdaten TBD2 zugeführt, aus denen durch das trainierte Steuermodell H Steuerdaten CD abgeleitet werden. Dies erfolgt insbesondere außerhalb der ersten Zugriffsdomäne AC1, so dass der Betreiber des technischen Systems TS keinen Datenzugriff auf das Steuermodell H erlangt. Die abgeleiteten Steuerdaten CD dienen zum Steuern des technischen Systems TS. Die Steuerdaten CD können insbesondere Simulationsdaten, Prognosedaten, Analysedaten, Zustandsdaten, Klassifikationsdaten, Überwachungsdaten und/oder andere zur Steuerung des technischen Systems TS beitragende Daten sein. Die Steuerdaten CD werden vom Modellausführungssystem MES zur Steuerung CTL übermittelt. Die Steuerung CTL steuert dann mittels der Steuerdaten CD das technische System TS.

Durch die Separation der Transformation der zweiten Betriebsdaten BD2 von der Ausführung des Steuermodells H kann einerseits der Modellanbieter MA die Vertraulichkeit seines Steuermodells H gegenüber dem Betreiber BTS wahren und andererseits der Betreiber BTS die Vertraulichkeit seiner Betriebsdaten BD2 gegenüber dem Modellanbieter MA wahren. Eine Verschlüsselung des Steuermodells H ist dabei nicht erforderlich.

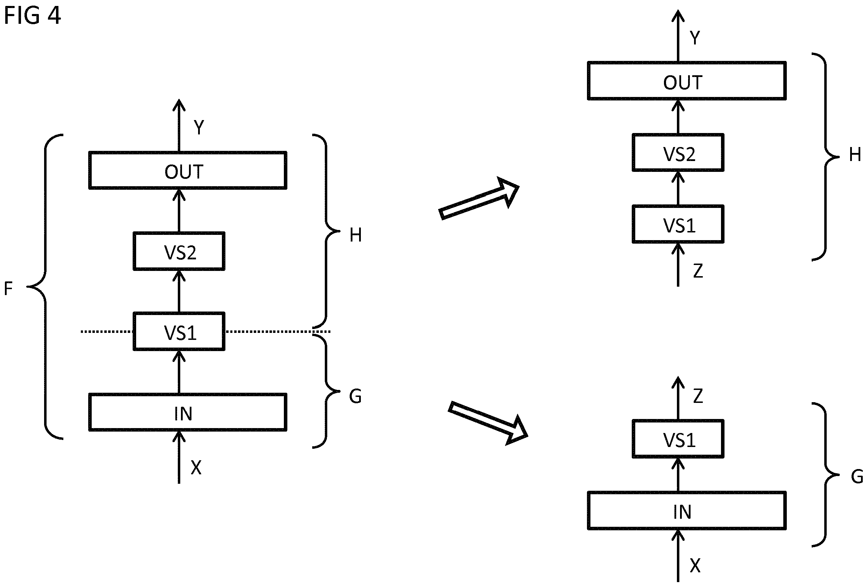

Figur 4 veranschaulicht eine besonders vorteilhafte Generierung einer Transformationsfunktion G und eines Steuermodells H aus einem Initialmodell F. Das Initialmodell F wird hierbei als Ganzes trainiert und das trainierte Initialmodell F in die Transformationsfunktion G und das Steuermodell H aufgespalten. Das Training und die Aufspaltung wird vorzugsweise durch den Modellanbieter MA, d.h. innerhalb der zweiten Zugriffsdomäne AC2 und außerhalb der ersten Zugriffsdomäne AC1 ausgeführt. Insbesondere kann hierbei die Aufspaltung durch den Modellanbieter MA festgelegt werden. Die Aufspaltung wird vorzugsweise so vorgenommen, dass vertrauliche Implementierungsdetails des Initialmodells F möglichst vollständig im Steuermodell H und nicht in der Transformationsfunktion G kodiert werden. Die Transformationsfunktion G und das Steuermodell H, die auf diese Weise generiert werden, können dann wie oben beschrieben eingesetzt werden.

Das Initialmodell F ist vorzugsweise ein neuronales Netz mit einer Eingabeschicht IN, mehreren verdeckten Schichten VS1, VS2 und einer Ausgabeschicht OUT. Vorzugsweise umfasst mindestens eine der verdeckten Schichten, hier VS1, weniger Neuronen als die Eingabeschicht IN. Das Initialmodell F wird zunächst als einheitliches neuronales Netz anhand von Eingabedaten X, hier den ersten Betriebsdaten BD1 trainiert, so dass die aus den Eingabedaten X abgeleiteten Ausgabedaten Y, hier die Steuerdaten CD, hinsichtlich vorgegebener Kriterien optimiert werden. Als Kriterien können die oben angegebenen Optimierungskriterien verwendet werden.

Das Initialmodell F wird nach seinem Training an einer verdeckten Schicht, hier VS1 in zwei neuronale Teilnetze aufgespalten. Das in Figur 4 unten dargestellte Teilnetz mit der Schicht IN als Eingabeschicht und der Schicht VS1 als neuer Ausgabeschicht repräsentiert dabei eine erste Teilfunktion. Die im unteren Teilnetz von der versteckten Schicht VS1 ausgegebenen, transformierten Daten Z sind obfuskiert, so dass daraus die Eingabedaten X nicht ohne Weiteres rekonstruiert werden können. Darüber hinaus sind die transformierten Daten Z hinsichtlich ihrer Dimension auch reduziert, da die versteckte Schicht VS1 weniger Neuronen aufweist als die Eingabeschicht IN. Somit kann die erste Teilfunktion vorteilhafterweise als trainierte Transformationsfunktion G zur Transformation der Eingabedaten X, d.h. hier der zweiten Betriebsdaten BD2, in transformierte Daten Z, d.h. hier in die transformierten zweiten Betriebsdaten TBD2, wie oben beschrieben bereitgestellt und verwendet werden. Damit gilt Z=G(X) bzw. TBD2=G (BD2) .

Das in Figur 4 oben dargestellte Teilnetz mit der versteckten Schicht VS1 als neuer Eingabeschicht und der ursprünglichen Ausgabeschicht OUT als Ausgabeschicht repräsentiert eine zweite Teilfunktion. Das obere Teilnetz ist trainiert auf eine Umsetzung von an der versteckten Schicht VS1 eingehenden, durch die Transformationsfunktion G transformierten Daten Z, in die Ausgabedaten Y, d.h. hier in die optimierten Steuerdaten CD. Somit kann die zweite Teilfunktion vorteilhafterweise als trainiertes Steuermodell H zur Ableitung der Steuerdaten CD aus den transformierten zweiten Betriebsdaten TBD2 wie oben beschrieben bereitgestellt und verwendet werden. Damit gilt Y=H(Z) bzw. CD=H(TBD2).

Durch die in Figur 4 veranschaulichte Modellgenerierung können eine trainierte Transformationsfunktion G und ein trainiertes Steuermodell H besonders einfach bereitgestellt werden. Die gewissermaßen gemeinsam trainierten Teilfunktionen G und H sind dabei auf natürliche Weise konsistent und besonders gut aufeinander abgestimmt.

## Patentansprüche

1. Verfahren zum Steuern eines technischen Systems (TS) anhand eines Steuermodells (H), wobei
a) eine Transformationsfunktion (G) zum Reduzieren und/oder Obfuskieren von Betriebsdaten (BD1, BD2) des technischen Systems (TS) zu transformierten Betriebsdaten (TBD1, TBD2) in einer ersten Zugriffsdomäne (AC1) bereitgestellt wird,
b) in einer zweiten Zugriffsdomäne (AC2) außerhalb der ersten Zugriffsdomäne (AC1) das Steuermodell (H) durch einen Modellgenerator (MG) abhängig von ersten Betriebsdaten (BD1) des technischen Systems (TS) generiert wird,
c) in der vom Steuermodell (H) separierten ersten Zugriffsdomäne (AC1) zweite Betriebsdaten (BD2) des technischen Systems (TS) erfasst und durch die Transformationsfunktion (G) zu transformierten zweiten Betriebsdaten (TBD2) transformiert werden,
d) die transformierten zweiten Betriebsdaten (TBD2) von einem in einer separierten Zugriffsdomäne (AC2) außerhalb der ersten Zugriffsdomäne (AC1) befindlichen Modellausführungssystem (MES) empfangen werden,
e) durch das Modellausführungssystem (MES) das Steuermodell (H) unter Zuführung der transformierten zweiten Betriebsdaten (TBD2) in einer von den zweiten Betriebsdaten (BD2) separierten Zugriffsdomäne (AC2) ausgeführt wird, wobei aus den transformierten zweiten Betriebsdaten (TBD2) Steuerdaten (CD) abgeleitet werden, und
f) die Steuerdaten (CD) zur Steuerung des technischen Systems (TS) übermittelt werden.

2. Verfahren nach Anspruch 1, **dadurch gekennzeichnet, dass** die Generierung des Steuermodells (H) anhand von durch die Transformationsfunktion (G) transformierten ersten Betriebsdaten (TBD1) erfolgt.

3. Verfahren nach einem der vorhergehenden Ansprüche, **dadurch gekennzeichnet, dass**
das Steuermodell (H) ein neuronales Netz, einen datengetriebenen Regressor, eine Support-Vector-Machine und/oder einen Entscheidungsbaum umfasst.

4. Verfahren nach einem der vorhergehenden Ansprüche, **dadurch gekennzeichnet, dass**
der Modellgenerator (MG) und/oder das Modellausführungssystem (MES) durch einen Modellanbieter (MA) separiert vom technischen System (TS) betrieben wird.

5. Verfahren nach Anspruch 4, **dadurch gekennzeichnet,**
**dass** die Transformationsfunktion (G) durch den Modellanbieter (MA) bereitgestellt wird, und
**dass** die Transformationsfunktion (G) eine Informationsreduktion ausführt.

6. Verfahren nach einem der vorhergehenden Ansprüche, **dadurch gekennzeichnet,**
**dass** die Transformationsfunktion (G) durch einen Betreiber (BTS) des technischen Systems (TS) bereitgestellt wird, und dass die Transformationsfunktion (G) eine Informationsobfuskation und/oder eine Informationsreduktion ausführt.

7. Verfahren nach einem der vorhergehenden Ansprüche, **dadurch gekennzeichnet, dass**
ein Initialmodell (F) anhand der ersten Betriebsdaten (BD1) trainiert wird,
das Initialmodell (F) in eine erste Teilfunktion und eine zweite Teilfunktion aufgespalten wird, und
die erste Teilfunktion als Transformationsfunktion (G) und die zweite Teilfunktion als Steuermodell (H) bereitgestellt werden.

8. Verfahren nach einem der vorhergehenden Ansprüche, **dadurch gekennzeichnet, dass**
die Transformationsfunktion (G) einen neuronalen Autoencoder umfasst.

9. Verfahren nach einem der vorhergehenden Ansprüche, **dadurch gekennzeichnet, dass**
die Transformationsfunktion (G) eine Multiplikation mit einer Zufallsmatrix umfasst.

10. Verfahren nach einem der vorhergehenden Ansprüche, **dadurch gekennzeichnet, dass**
das Steuermodell (H) anhand von vom technischen System (TS) unabhängigen Daten trainiert wird.

11. Anordnung zum Steuern eines technischen Systems (TS) anhand eines Steuermodells (H), eingerichtet zum Ausführen eines Verfahrens nach einem der vorhergehenden Ansprüche.

12. Computerprogrammprodukt umfassend Befehle, die bewirken, dass die Anordnung nach Anspruch 11 die Verfahrensschritte nach einem der Ansprüche 1 bis 10 ausführt.

13. Computerlesbares Speichermedium mit einem Computerprogrammprodukt nach Anspruch 12.

## Claims

1. Method for controlling a technical system (TS) on the basis of a control model (H), wherein
a) provision is made of a transformation function (G) for reducing and/or obfuscating operating data (BD1, BD2) of the technical system (TS) to form transformed operating data (TBD1, TBD2) within a first access domain (AC1),
b) in a second access domain (AC2) outside of the first access domain (AC1), the control model (H) is generated by a model generator (MG) as a function of first operating data (BD1) of the technical system (TS),
c) second operating data (BD2) of the technical system (TS) are captured in the first access domain (AC1) that is separated from the control model (H) and said second operating data are transformed into transformed second operating data (TBD2) by the transformation function (G),
d) the transformed second operating data (TBD2) are received by a model execution system (MES) situated in a separated access domain (AC2) outside of the first access domain (AC1) ,
e) the control model (H) is executed by the model execution system (MES) with a supply of the transformed second operating data (TBD2) in an access domain (AC2) that is separated from the second operating data (BD2), with control data (CD) being derived from the transformed second operating data (TBD2), and
f) the control data (CD) are transmitted for the purposes of controlling the technical system (TS).

2. Method according to Claim 1, **characterized in that** the control model (H) is generated on the basis of first operating data (TBD1) that were transformed by the transformation function (G).

3. Method according to either one of the preceding claims, **characterized in that**
the control model (H) comprises a neural network, a datadriven regressor, a support vector machine and/or a decision tree.

4. Method according to any one of the preceding claims, **characterized in that**
the model generator (MG) and/or the model execution system (MES) are/is operated by a model vendor (MA) in a manner separated from the technical system (TS).

5. Method according to Claim 4, **characterized in that** the transformation function (G) is provided by the model vendor (MA) and
**in that** the transformation function (G) carries out information reduction.

6. Method according to any one of the preceding claims, **characterized**
**in that** the transformation function (G) is provided by an operator (BTS) of the technical system (TS) and
**in that** the transformation function (G) carries out information obfuscation and/or information reduction.

7. Method according to any one of the preceding claims, **characterized in that**
an initial model (F) is trained on the basis of the first operating data (BD1),
the initial model (F) is split into a first partial function and a second partial function, and
the first partial function is provided as transformation function (G) and the second partial function is provided as control model (H).

8. Method according to any one of the preceding claims, **characterized in that**
the transformation function (G) comprises a neural autoencoder.

9. Method according to any one of the preceding claims, **characterized in that**
the transformation function (G) comprises multiplication by a random matrix.

10. Method according to any one of the preceding claims, **characterized in that**
the control model (H) is trained on the basis of data that are independent of the technical system (TS).

11. Arrangement for controlling a technical system (TS) on the basis of a control model (H), configured to carry out a method according to any one of the preceding claims.

12. Computer program product comprising commands which cause the arrangement according to Claim 11 to carry out the method steps according to any one of Claims 1 to 10.

13. Computer-readable storage medium having a computer program product according to Claim 12.

## Revendications

1. Procédé destiné à la commande d'un système technique (TS) à l'aide d'un modèle de commande (H), dans lequel :
a) une fonction de transformation (G) qui est destinée à la réduction et/ou à l'obfuscation de données de fonctionnement (BD1, BD2) du système technique (TS), dans le but d'obtenir des données de fonctionnement qui ont été transformées (TBD1, TBD2), est mise à disposition dans un premier domaine d'accès (AC1) ;
b) dans un deuxième domaine d'accès (AC2), à l'extérieur du premier domaine d'accès (AC1), le modèle de commande (H) est généré par l'intermédiaire d'un générateur de modèle (MG) en fonction des premières données de fonctionnement (BD1) du système technique (TS) ;
c) dans le premier domaine d'accès (AC1), séparé du modèle de commande (H), des deuxièmes données de fonctionnement (BD2) du système technique (TS) sont enregistrées et sont transformées par l'intermédiaire de la fonction de transformation (G), dans le but d'obtenir des deuxièmes données de fonctionnement qui ont été transformées (TBD2) ;
d) les deuxièmes données de fonctionnement qui ont été transformées (TBD2) sont reçues par un système d'exploitation de modèle (MES) qui se trouve dans un domaine d'accès séparé (AC2) à l'extérieur du premier domaine d'accès (AC1) ;
e) par l'intermédiaire du système d'exploitation de modèle (MES), le modèle de commande (H) est exploité au cours de l'alimentation des deuxièmes données de fonctionnement qui ont été transformées (TBD2) à un domaine d'accès (AC2) qui est séparé des deuxièmes données de fonctionnement (BD2) ; dans lequel, à partir des deuxièmes données de fonctionnement qui ont été transformées (TBD2), des données de commande (CD) sont dérivées ; et
f) les données de commande (CD) sont transmises à des fins de commande du système technique (TS).

2. Procédé selon la revendication 1, **caractérisé en ce que** la génération du modèle de commande (H) a lieu à l'aide de premières données de fonctionnement (TBD1) qui ont été transformées par la fonction de transformation (G).

3. Procédé selon l'une quelconque des revendications précédentes, **caractérisé en ce que** le modèle de commande (H) comprend un réseau neuronal, une variable indépendante entraînée par des données, une machine à vecteurs de support et/ou un arbre de décision.

4. Procédé selon l'une quelconque des revendications précédentes, **caractérisé en ce que** le générateur de modèle (MG) et/ou le système d'exploitation de modèle (MES) est/sont entraîné(s) par un fournisseur de modèle (MA) qui est séparé du système technique (TS).

5. Procédé selon la revendication 4, **caractérisé en ce que** la fonction de transformation (G) est mise à disposition par le fournisseur de modèle (MA) ; et **en ce que** la fonction de transformation (G) met en œuvre une réduction des informations.

6. Procédé selon l'une quelconque des revendications précédentes, **caractérisé en ce que** la fonction de transformation (G) est mise à disposition par l'intermédiaire d'un opérateur (BTS) du système technique (TS) ; et **en ce que** la fonction de transformation (G) met en œuvre une obfuscation des informations et/ou une réduction des informations.

7. Procédé selon l'une quelconque des revendications précédentes, **caractérisé en ce que** l'on soumet un modèle initial (F) à un entraînement à l'aide des premières données de fonctionnement (BD1) ; on répartit le modèle initial (F) en une première fonction partielle et en une deuxième fonction partielle ; et la première fonction partielle est mise à disposition pour faire office de fonction de transformation (G) et la deuxième fonction partielle est mise à disposition pour faire office de modèle de commande (H).

8. Procédé selon l'une quelconque des revendications précédentes, **caractérisé en ce que** la fonction de transformation (G) comprend un auto-encodeur neuronal.

9. Procédé selon l'une quelconque des revendications précédentes, **caractérisé en ce que** la fonction de transformation (G) comprend une multiplication avec une matrice aléatoire.

10. Procédé selon l'une quelconque des revendications précédentes, **caractérisé en ce que** le modèle de commande (H) est soumis à un entraînement à l'aide de données qui ne dépendent pas du système technique (TS).

11. Agencement destiné à la commande d'un système technique (TS) à l'aide d'un modèle de commande (H) qui est conçu pour la mise en œuvre d'un procédé selon l'une quelconque des revendications précédentes.

12. Produit de programme informatique qui comprend des instructions qui font en sorte que l'agencement selon la revendication 11 exécute les étapes opératoires selon l'une quelconque des revendications 1 à 10.

13. Support de stockage lisible par ordinateur dans lequel est inclus un produit de programme informatique selon la revendication 12.
